# EUROPEAN PATENT SPECIFICATION

(11) **EP 0 647 675 B1**
(45) Date of publication and mention of the grant of the patent: **25.02.1998**
(21) Application number: 94307441.9
(22) Date of filing: 11.10.1994
(51) Int. Cl.: C08L 7/00, B60C 1/00, C08L 9/00

(54) **Rubber compositions for base tread and tyres using the same**
Kautschukmischung für die Basisschicht in der Lauffläche und mit dieser versehene Reifen
Composition de caoutchouc pour couche de base de la bande de roulement et pneu l'utilisant

(30) Priority: 12.10.1993 JP 254449/93
(43) Date of publication of application: 12.04.1995
(73) Proprietor: Sumitomo Rubber Industries Ltd., Kobe-shi, Hyogo 651 (JP)
(72) Inventor: Matsuo, Toshiro, Kakogawa-sho, Hyogo-ken (JP); Kikuchi, Naohiko, Akashi-shi, Hyogo-ken (JP)
(74) Representative: Stewart, Charles Geoffrey

(56) References cited:
- EP-A- 0 089 839
- FR-A- 2 490 651
- FR-A- 2 603 592
- US-A- 4 397 994
- US-A- 4 812 525

## Description

The present invention relates to a rubber composition for a base or sub-tread and a tyre using the rubber composition. More specifically it relates to a tyre tread of a two-layer structure, which not only achieves saving of fuel consumption but also makes for reduced deformation of an extruded tread during manufacture of tyres and assures uniformity after vulcanisation, and a rubber composition for a base tread used for a base portion of a tread of the tyre.

In recent years, demands for saving of resources and energy have been increasing throughout the world. In the course of developments of tyres for cars and electric cars with smaller energy loss and decreased fuel consumption, various studies have been made specifically in relation to tyre tread structures and rubber materials used for the tread.

For instance, there are proposed ideas to save fuel consumption, such as using a tread of a two-layered structure comprising a cap portion and a base portion instead of a tread of a conventional one-layer structure provided with a fuel saving rubber as the base portion of the tread (JP-B-12244/1985, JP-B-45961/1988 and JP-B-33361/1989), and a styrenebutadiene co-polymer rubber (JP-A-100112/1982 and JP-A-179212/1982) which is obtained by solution polymerisation in an organic solvent with the use of organolithium compound as a catalyst being used for the cap portion of the above-mentioned tread.

Furthermore, in another idea for saving fuel consumption which has also been proposed, a rubber composition prepared by blending a small amount of a carbon black as a reinforcing material in a rubber such as a natural rubber, synthesised isoprene rubber and butadiene rubber is used for the base position of the tread having the above-mentioned two-layer structure.

Certainly the problems in the tyres having a conventional one-layer structure, such as high rolling resistance and a low grip characteristic, are solved and fuel saving can be achieved to a considerable extent in the cases of the above-mentioned fuel saving tyres employing fuel saving rubbers for the base portion, styrene-butadiene copolymer rubber for the cap portion of the tread, and a rubber composition prepared by blending a small amount of a carbon black in a rubber such as a natural rubber, synthesised isoprene rubber and butadiene rubber used for the base portion of the tread. However, contrarily there is a problem in that uniformity of the overall shape of the tyres becomes remarkably worse mainly due to non-uniformity of the base tread thickness.

Therefore further studies have been made as to why the above-mentioned lowering of uniformity of the overall tread shape occurs. As a result, it was found that the reason is that there is some difference in tread gauge distribution between a tyre moulded and vulcanised immediately after the tread is extruded and cut and a tyre moulded and vulcanised when the tread has been allowed to stand for a while after extrusion. That is to say, when a non-vulcanised tread rubber is extruded and cut to circumferential length of a tyre and allowed to stand, for instance, for from two or three hours to 24 hours, there occurs an adverse phenomenon (this phenomenon is referred to as a shrinkage) at the cut portion so that the rubber shrinks in the extrusion direction, enlarges a little in the direction of the width and becomes thicker in the direction of its thickness. The extruded tread gauge thus changes due to such shrinkage. Furthermore it was confirmed that the degree of shrinkage varies mainly with component of rubber composition to be used for the base portion of the tread having a two-layer structure.

Therefore one object of the present invention is to provide a tyre and a rubber composition for a base portion of a tread of a tyre that not only saves fuel consumption but also has a tread gauge distribution which scarcely changes and gives uniformity of shape after vulcanisation which is excellent event if the tread rubber is allowed to stand for a while after extrusion and cut. The result is that the shrinkage which occurs particularly on the base portion of the conventional tread having a two-layer structure does scarcely occur.

The present inventors made intensive studies in light of the above-mentioned prior art in order to obtain a tyre, which can not only achieve saving of fuel consumption but also provides excellent uniformity of shape after vulcanisation, and also a rubber composition suitable for a base portion of a tread of a tyre.

Accordingly, one aspect of the present invention provides a tyre comprising a tread having a two-layer structure of a cap portion and a base portion wherein the rubber composition for the base tread portion is characterised by blending, per 100 parts by weight of a rubber component, 30 to 55 parts by weight of a carbon black having an iodine adsorption value of from 40 to 100g/kg, said rubber component comprising:
(A) 20 to 55% by weight of a star shaped solution-polymerised butadiene rubber having a rate of coupling with tin tetrachloride of not less than 25% and a molecular weight distribution (weight average molecular weight/number average molecular weight) of 1.2 to 3, and
(B) 45 to 80% by weight of a natural rubber or a natural rubber containing a diene rubber other than a star shaped solution-polymerised rubber in an amount of not more than 50% by weight, and the tan 6 value of the rubber of the base tread portion is smaller than the tan δ value of the rubber of the cap tread portion.

As mentioned above, the rubber composition for the base tread of the present invention is obtained by blending, per 100 parts by weight of the rubber component, 30 to 55 parts by weight of a carbon black having an iodine adsorption value of from 40 to 100g/kg, wherein the rubber component comprises (A) 20 to 55% by weight of the star shaped solution-polymerised butadiene rubber having a rate of coupling with tin tetrachloride of not less than 25% and a molecular weight distribution (weight average molecular weight (hereinafter referred to as "Mw")/number average molecular weight (hereinafter referred to as "Mn")) of 1.2 to 3 and (B) 45 to 80% by weight of the natural rubber or the natural rubber containing the diene rubber other than the star shaped solution-polymerised rubber in an amount of not more than 50%.

The butadiene rubber used as the rubber component in the present invention preferably is a star shaped solution-polymerised rubber of which its molecular weight distribution (Mw/Mn) has two peaks by coupling subsequent to polymerisation, and is obtained by solution polymerisation.

The star shaped solution-polymerised butadiene rubber can be obtained by a usual method by mixing an organic solvent such as a hydrocarbon solvent, for example, n-hexane, cyclohexane or tetrahydrofuran with butadiene or a mixture of butadiene and styrene, polymerising the resulting mixture with the use of a polymerisation initiator of a lithium compound or the like, for example, an alkyl lithium at the desired polymerising temperature and time, and then coupling the polymer obtained with a coupling agent.

In the present invention, tin tetrachloride has an excellent reactivity with the carbon black during mixing and is used as the coupling agent, since rubber coupled with tin tetrachloride tends to be kept in shape from cold flow and further gives a low fuel consumption. The rate of coupling with tin tetrachloride is not less than 25%, preferably 30 to 60%. When less than 25% the property to keep the obtained polymer in shape from cold flow is lowered, which makes the polymer easily flow. The rate of coupling is the ratio of a polymer having a tin-butadienyl bond at the reactive end to the whole polymer.

The above-mentioned star shaped solution-polymerised butadiene rubber has a molecular weight distribution (Mw/Mn) of 1.2 to 3, preferably 1.5 to 2.5. When the molecular weight distribution (Mw/Mn) is less than 1.2, processability of the rubber composition for the base tread is lowered, and when more than 3, the rolling resistance of tyres manufactured by the use of the rubber composition for the base tread becomes larger. Also the above-mentioned molecular weight distribution curve has two peaks. When the peak in the smaller molecular weight region is lower than the peak appeared in the larger molecular weight region, it indicates that the aforesaid rate of coupling is higher. In the present invention, there is no specific limitation as to the distance (difference between the molecular weights) of those two peaks or the difference in the height thereof.

It is also possible to replace a part of the star shaped solution-polymerised butadiene rubber with a star shaped solution-polymerised styrene-butadiene rubber. When using the star shaped solution-polymerised styrene-butadiene rubber alone, there is a tendency to make the rolling resistance worse as compared with the star shaped solution-polymerised butadiene rubber. Therefore, the amount of star shaped solution-polymerised styrene-butadiene rubber is at most a half of the star shaped solution-polymerised butadiene rubber. The content of styrene of the star shaped solution-polymerised styrene-butadiene copolymer rubber is not more than 18% by weight, preferably not more than 15%. When the above-mentioned content of styrene is more than 18%, the rolling resistance of the tyres manufactured using the rubber composition becomes larger. In order to lower the content of styrene of the star shaped solution-polymerised styrenebutadiene copolymer rubber down to not more than 18%, the blending ratio of styrene to butadiene may be adjusted at the time of the above-mentioned solution polymerisation.

Also the amount of vinyl bond of butadiene of the aforesaid star shaped solution-polymerised styrenebutadiene copolymer rubber is 15 to 65% by weight, more preferably 20 to 60% by weight. When the amount of the vinyl bond is less than 15%, the rubber is difficult to produce as a copolymer rubber. When more than 65%, the tear strength and tensile strength of the vulcanised rubber lower, and the glass transition temperature of the polymer rises too high, which leads to a too large rolling resistance of tyres manufactured using the rubber composition.

The rubber component (B) of the present invention other than (A) the star shaped solution-polymerised butadiene rubber may be a natural rubber or a natural rubber containing diene rubbers other than a star shapes solution-polymerised rubber (hereinafter referred to as "other diene rubbers").

Examples of other diene rubbers are rubbers generally used for tyres such as butadiene rubber, styrene-butadiene rubber and isoprene rubber. Among those, the butadiene rubber is preferable from a point that more saving of fuel consumption can be achieved. When the other diene rubbers are blended with natural rubber, the blending amount of the other diene rubbers is not more than 50% by weight of the component (B), preferably not more than 30% by weight. When the blending ratio of the other diene rubbers with the natural rubber is more than 50% by weight, for example, in the case of the butadiene rubber, processability such as kneading and extruding becomes inferior, and in the case of the styrene-butadiene rubber and the isoprene rubber, the hysteresis loss becomes larger compared to natural rubbers and the rolling resistance of the manufactured tyres increases.

The blending weight ratio of the star shaped solution-polymerised butadiene rubber/the natural rubber or the natural rubber containing the other diene rubbers is 20 to 55/80 to 45, preferably 25 to 50/75 to 50. If the amount of the star shaped solution-polymerised butadiene rubber is less than 20% by weight, stability of a shape of the extruded tread becomes inferior, and if more than 55% by weight, the homogeneousness of each component at the time of kneading or mixing the rubber composition becomes worse giving lower smoothness on the extruded surface, and the tackiness of the rubber becomes reduced. Thus it becomes difficult to build tyres.

The carbon black having an iodine adsorption value of from 40 to 100g/kg is mixed as filler into the rubber composition of the present invention.

The above-mentioned iodine adsorption value of the carbon black is measured by the measuring method prescribed in ASTM D1510. The iodine adsorption value of the carbon black is 40 to 100g/kg, preferably 43 to 90g/kg. When the iodine adsorption value of the carbon black is less than 40g/kg, the rolling resistance of tyres manufactured using the rubber composition becomes too small, and tensile strength and tear strength of the rubber become worse. When more than 100g/kg, the rolling resistance becomes larger.

Examples of carbon blacks having an iodine adsorption value of 40 to 100g/kg are those of the types or classes known as Fast Extruding Furnace (commonly referred to as "FEF") and High Abrasion Furnace (commonly referred to as "HAF").

The blending amount of the carbon black is 30 to 55 parts (parts by weight, hereinafter the same), preferably 35 to 50 parts, per 100 parts of the above-mentioned rubber components. When the blending amount of the carbon black is less than 30 parts, the smoothness of the extruded surface becomes worse and the tensile strength and tear strength of the vulcanised rubber becomes lower. When more than 55 parts, though processability is improved, the rolling resistance of the tyre manufactured with the rubber composition becomes larger.

With the rubber composition for the base tread of the present invention, if necessary, there can be blended the usual additives, for example, vulcanising agents such as sulfur, vulcanising activators such as zinc oxides and stearic acids, vulcanising accelerators like thiazol accelerators such as mercaptobenzothiazol (MBT), dibenzothiazoldisulfide (MBTS), N-tert-butyl-2-benzothiazolylsulfenamide(TBBS) and N-cyclohexyl-2-benzothiazolsulfenamide(CZ), antioxidants such as N-(1,3-dimethylbutyl)-N'-phenyl-p-phenylenediamine (6c), process oils such as aromatic oil, naphthene oil and paraffin oil, waxes, organic fibres and foaming agents in such amounts that the purpose of the present invention is not affected.

For manufacture of the compositions, for example, the components other than the vulcanising agents and the vulcanising activators are first mixed or kneaded, for example in a Banbury mixer. Then the vulcanising agents and the vulcanising activators are added, and further kneading is carried out, for example, by rolls or in a Banbury mixer to obtain the rubber composition for the base tread. The time and temperature required for the above-mentioned kneading are not particularly limited, and may be so adjusted that each component is kneaded uniformly.

Subsequently, the resultant rubber composition for the base tread is extruded with an extruder, assembled with a cap tread rubber, and then cut to produce the required tread having a two-layer structure of a cap portion and a base portion. Afterwards a tyre can be manufactured with the tread by the usual method.

There is no limitation to the cap tread rubber to be used for the tyres of the present invention, and such rubber as is usually used for a cap portion of a tread having a two-layer structure may be applied.

In the tyre of the present invention, the thickness of the base portion is 10 to 35%, preferably 15 to 30% of the total tread thickness. When the thickness of the base portion is less than 10%, though occurrence of the shrinkage in the base portion is lessened, saving of fuel consumption by the tyre tends to be affected. When more than 35%, abrasion of the tyre increases remarkably, and the base portion of the tread appears on the outer surface, and thus tyre performances, particularly the grip characteristic, tend to lower.

Also in the tyre of the present invention, for the base portion where a grip characteristic is not needed, the use of a rubber having a smaller tan δ value than that of the rubber for the cap portion where an excellent grip characteristic is required is preferable from the point that an improvement of grip characteristic of the tyre and saving of fuel consumption can be sufficiently achieved at the same time. Furthermore it is preferable that the difference in tan δ value of the rubbers between the base portion and the cap portion is about 0.05 to 0.2.

The rubber composition for the base tread and the tyre using the rubber composition of the present invention are further explained by means of the following Examples, but the present invention is not limited by the Examples.

### Examples 1 to 6 and Comparative Examples 1 to 8

The rubber compositions for the base tread were obtained by blending, per 100 parts of the rubber components shown in Tables 1, 2 and 3, 35 parts of a carbon black, 5 parts of an aromatic process oil, 2 parts of Sunnoc wax, 2 parts of N-(1,3-dimethylbutyl)-N'-phenyl-p-phenylenediamine (6c), 2 parts of stearic acid and 3 parts of zinc oxide, which are shown in Tables 1, 2 and 3, then kneading at 160° to 180° in a Banbury mixer (BB270 available from Kobe Steel Ltd), adding 2 parts of sulfur and 2 parts of N-cyclohexyl-2-benzothiazolsulfenamide (CZ), and kneading at about 80° to 110°C.

The resultant rubber composition for the base tread was extruded by means of an extruder (cold feed extruder available from Nakata Zoki Kabushiki Kaisha), assembled with cap tread rubbers, and then cut to the desired length to obtain tyre treads. The above-mentioned cap tread rubbers were made of rubber compositions obtained in the same manner as the rubber compositions for the base tread using 75 parts of NS116, 25 parts of NR, 65 parts of N351, 20 parts of an aromatic process oil, 2 parts of Sunnoc wax, 2 parts of 6c, 2 parts of stearic acid, 3 parts of zinc oxide, 2 parts of sulfur and 2 parts of CZ. The thickness of the base portion of the tread was so adjusted as to be 20 to 30% of the total tread thickness.

Then by observing the homogeneousness of each component in the Banbury mixer when preparing the rubber compositions for the base tread and the assembled conditions of the rubber compositions and cap tread rubbers when producing the tread, the processability was evaluated. The processability is represented by relative figures on the basis that the processability of the Comparative Example 1 (standard tyre) is set at 100. The results are shown in Tables 1, 2 and 3. The smaller the figure is, the better the processability.

After the tread was allowed to stand at room temperature for 24 hours, the circumferential length, width and thickness thereof were measured to evaluate shrinkage in comparison with those measured just after being extruded. The results are shown in Tables 1, 2 and 3. Figures in Tables 1, 2 and 3 are relative ones on the basis that the figure for Comparative Example 1 was set to be 100. The smaller the figure is, the better.

A 185/70R14 SP7 tyre was manufactured using the tread allowed to stand at room temperature for 24 hours.

The physical properties of the tyre, such as viscoelasticity, uniformity, and rolling resistance were evaluated in the manner mentioned below. The results are shown in Tables 1 and 2. Table 3 shows Comparative Example 7 in which the tyre was of a normal on-layer structure not of a cap/base structure and a publicly known blended rubber of a low rolling resistance was used for the tread. Comparative Example 8 shows a tyre of a cap/base structure in which the rubber of Comparative Example 7 was used for the base portion.
(1) Viscoelasticity (tan δ)
   Rubber samples were cut out from the cap portion and base portion of the tyre to prepare rubber pieces about 2mm thick, about 4mm wide and about 40mm long. With the use of those rubber pieces, tan δ values were measured under conditions of 10% initial elongation, 2% dynamic strain, 10Hz vibration frequency and at 70°C temperature using a viscoelasticity spectrometer (available from Kabushiki Kaisha Iwamoto Seisakusho). The tan δ value of the rubber of the cap portion was 0.15.
   Also Tables 1, 2 and 3 show the tan δ values of the rubber of the base portion and the differences in the tan δ value between the rubber of the cap portion and the rubber of the base portion.
(2) Uniformity
   The uniformity of tyre shape was observed under conditions of 2ksc of air pressure, 419kg of load when on a 14 x 5J wheel by the use of a uniformity machine (LT-TUGM available from Kobe Steel Ltd).
(3) Rolling resistance
   Rolling resistance of the tyre was measured under the conditions of 2ksc air pressure, 400kg load on a 14 x 5.5J wheel and at 80km/hr on a rolling resistance machine (available from T & T Co Ltd).

The above uniformity (2) and rolling resistance (3) are indicated by relative values on the basis that the value of Comparative Example 1 was set at 100. The smaller the figures are, the better.

The compositions of the cap tread rubber and the symbols shown in Tables 1, 2 and 3 are as shown below:
- BR1250:: Star shaped solution-polymerised butadiene rubber (available from Nippon Zeon Co Ltd, rate of coupling with tin tetrachloride: 30 to 40%, molecular weight distribution (Mw/Mn): 1.6 to 1.7, content of vinyl bond: 17% by weight, low-cis type)
- BR340L:: Butadiene rubber (available from Ube Industries Ltd, microstructure having about 98% by mole of cis content, about 1% by mole of trans content, about 1% by mole of vinyl content, glass transition temperature -108°C, high-cis type)
- NS116:: Star shaped solution-polymerised styrene-butadiene copolymer rubber (available from Japan Zeon Co ltd, content of styrene: 20% by weight, content of vinyl bond of butadiene: 60% by weight, rate of coupling with tin tetrachloride: 30 to 40%, molecular weight distribution (Mw/Mn): 1.5 to 1.7, glass transition temperature: -33°C

### Trial product

- SBR:: Star shaped solution-polymerised styrene-butadiene copolymer rubber (available from Sumitomo Chemical Co ltd, content of styrene: 25% by weight, content of vinyl bond of butadiene: 40% by weight, rate of coupling with silicon dioxides: 50 to 60%, molecular weight distribution (Mw/Mn): 1.5 to 1.7, glass transition temperature: -41°C
- NR:: Natural rubber
- N550:: Carbon black (iodine adsorption value (hereinafter referred to as "IA") by measuring method prescribed in ASTM D1510: 43g/kg, FEF class)
- N330:: Carbon black (IA: 82g/kg, HAF class)
- N339:: carbon black (IA: 90g/kg, HAF class)
- N351:: Carbon black (IA: 69g/kg, HAF class

At the time of solution polymerisation, an alkyl lithium was used as a polymerisation initiator for any of the above-mentioned BR1250, NS116 and the trial product SBR.

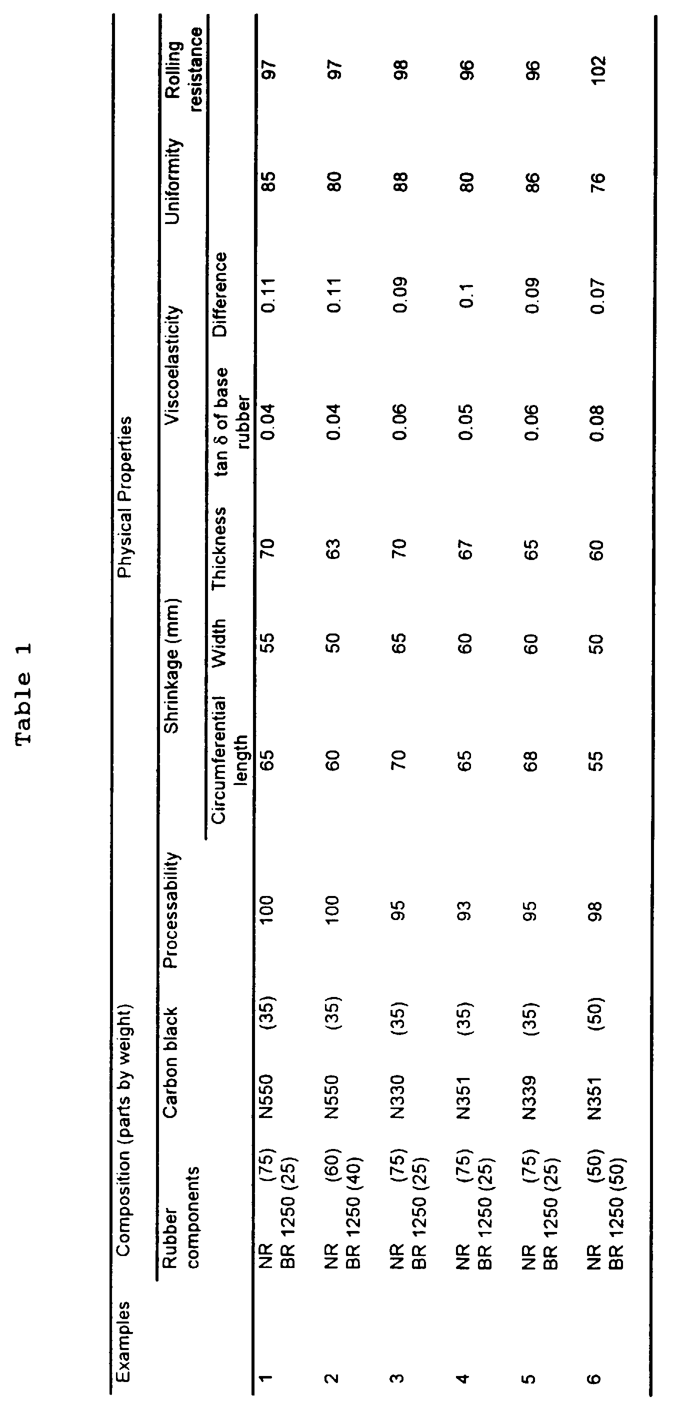

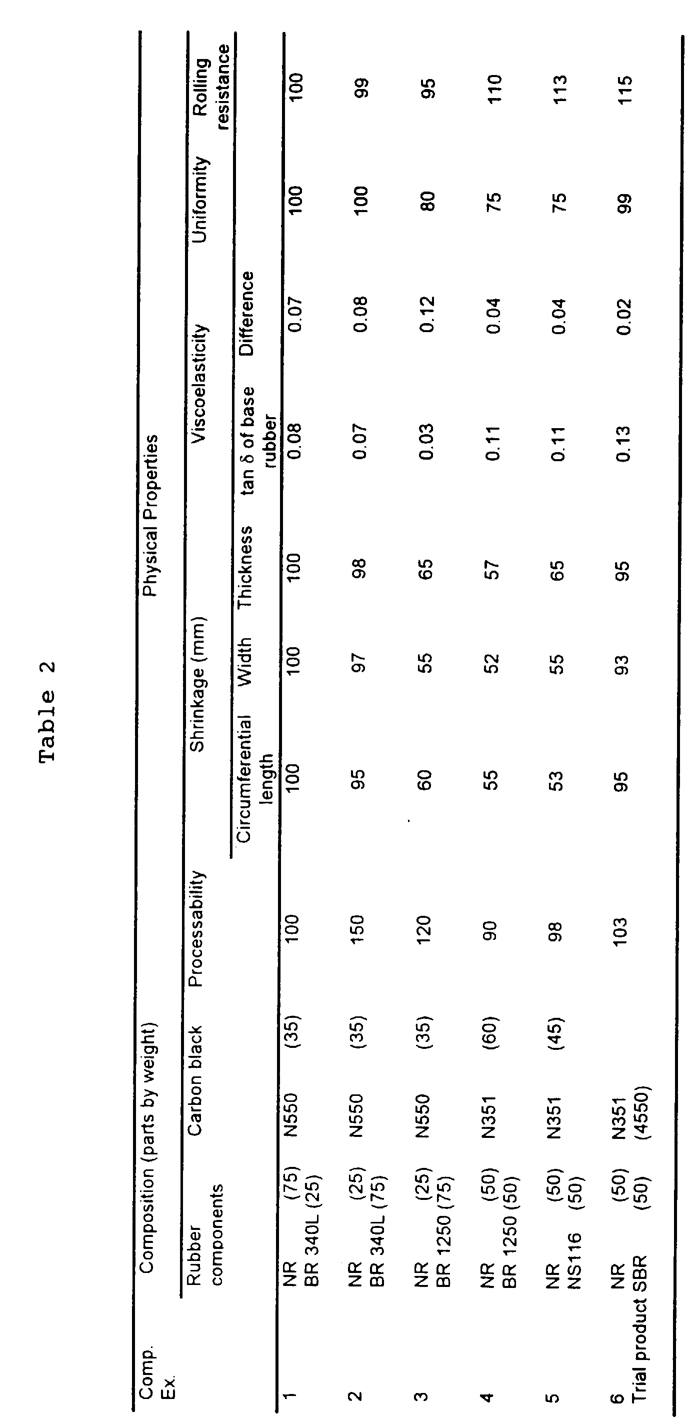

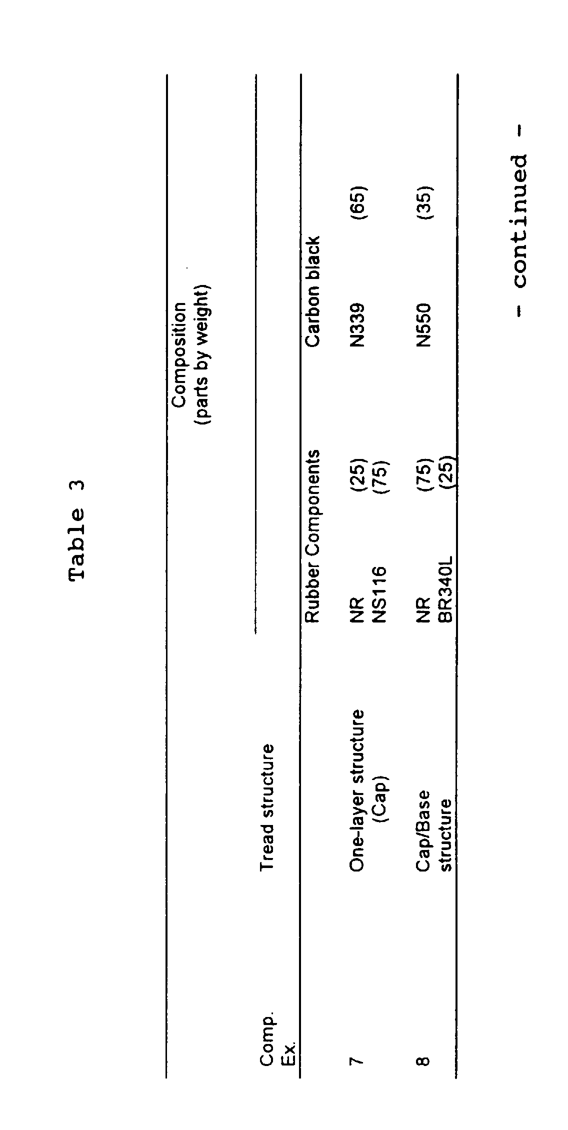

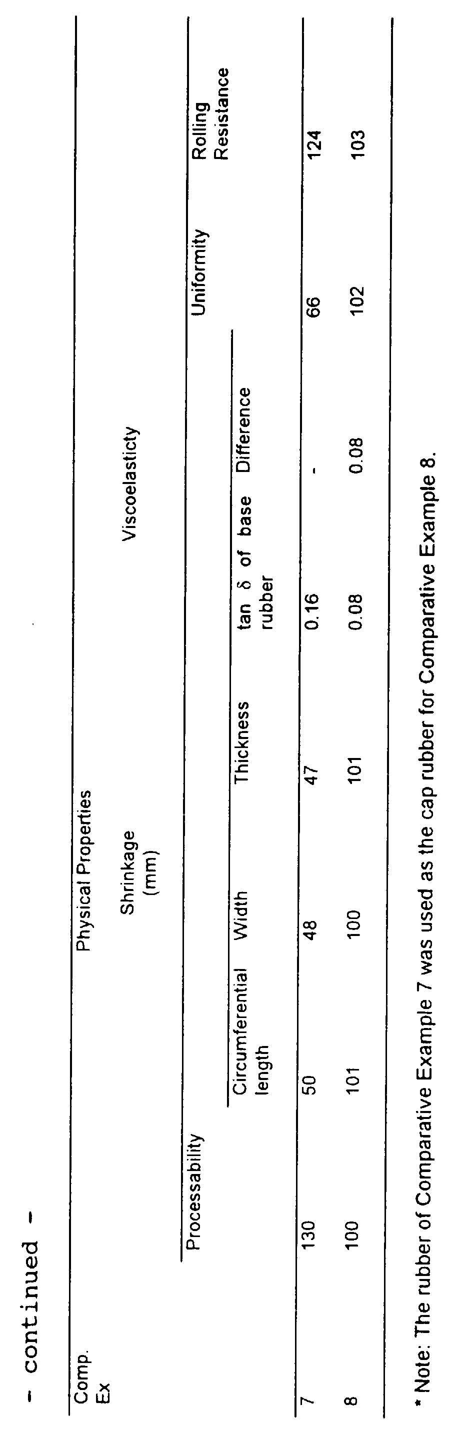

Comparison of the results shown in Table 1 with those shown in Table 2 shows that, in Examples 1 to 6, processability was excellent for producing the rubber compositions for the base tread and the treads using those rubber compositions, and also that shrinkage of the directions of circumferential length, width and thickness was less with respect to the treads obtained in Examples 1 to 6. Also in the tyres of Examples 1 to 6, it could be understood that the tan δ values of the rubbers of the bases portion were all relatively as small as not more than 0.08 and were smaller than those of the rubbers of the cap portion by 0.07 and 0.11, which indicated a very excellent uniformity of shape and the achievement of sufficient fuel saving. It could also be seen that in the case of the tyre particularly in Examples 1 to 5, the rolling resistances were small and good lowering fuel consumption was achieved. As regards the tyre obtained in Example 6, despite the fact that the blending amount of carbon black was relatively larger, the rolling resistance was seen to be not so high. The rolling resistance or the balance of uniformity and rolling resistance was much more excellent compared with Comparative Examples 7 and 8 in Table 3.

The tyre of the present invention, in which the rubber composition for the base tread is used for the base portion of the tread having a two-layer structure can not only achieve lowering of fuel consumption, but also provide such effects that shrinkage is much less in occurrence particularly in the base portion of the tread, the shape of the extruded tread is resistant to change and the shape uniformity after vulcanisation is excellent, even in the case where the tyre tread is allowed to stand for a while after extruding and cutting. Also the rubber composition for the base tread of the present invention has the effect of providing good processability.

## Claims

1. A tyre comprising a tread having a two-layer structure of a cap portion and a base portion wherein the rubber composition for the base tread portion is characterised by blending, per 100 parts by weight of a rubber component, 30 to 55 parts by weight of a carbon black having an iodine adsorption value of from 40 to 100g/kg, said rubber component comprising:
(A) 20 to 55% by weight of a star shaped solution-polymerised butadiene rubber having a rate of coupling with tin tetrachloride of not less than 25% and a molecular weight distribution (weight average molecular weight/number average molecular weight) of 1.2 to 3, and
(B) 45 to 80% by weight of a natural rubber or a natural rubber containing a diene rubber other than a star shaped solution-polymerised rubber in an amount of not more than 50% by weight, and the tan 6 value of the rubber of the base tread portion is smaller than the tan δ value of the rubber of the cap tread portion.

2. A tyre according to claim 1, characterised in that the thickness of the base portion is 10 to 35% of the total tread thickness.

3. A rubber composition for the base tread portion of claims 1 or 2, characterised in that the diene rubber other than the star shaped solution-polymerised rubber is butadiene rubber.

4. A rubber composition according to claim 3, characterised in that the star shaped solution-polymerised butadiene rubber has two peaks in the molecular weight distribution curve thereof.

## Patentansprüche

1. Reifen mit einer Lauffläche, die eine Zweilagenstruktur aus einem Abdeckungsteil und einem Basisteil aufweist, wobei die Kautschukzusammensetzung für den Basislaufflächenteil durch Mischen von 30 bis 55 Gewichtsteilen eines Rußes, der einen Jodadsorptionswert von 40 bis 100 g/kg aufweist, pro 100 Gewichtsteilen einer Kautschukkomponente gekennzeichnet ist, wobei die Kautschukkomponente umfaßt:
(A) 20 bis 55 Gewichts-% eines sternförmigen, lösungspolymerisierten Butadien-Kautschuks, der eine Kopplungsrate mit Zinntetrachlorid von nicht weniger als 25 % und eine Molekulargewichtsverteilung (auf das Gewichtsmittel bezogenes mittleres Molekulargewicht / auf das Zahlenmittel bezogenes mittleres Molekulargewicht) von 1,2 bis 3 aufweist, und
(B) 45 bis 80 Gewichts-% eines Naturkautschuks oder eines Naturkautschuks, der einen Dien-Kautschuk verschieden von einem sternförmigen, lösungspolymerisierten Kautschuk in einer Menge von nicht mehr als 50 Gewichts-% enthält, und der Wert von tan 6 des Kautschuks des Basislaufflächenteils kleiner als der Wert von tan 6 des Kautschuks des Abdeckungslaufflächenteils ist.

2. Reifen nach Anspruch 1, dadurch gekennzeichnet, daß die Dicke des Basisteils 10 bis 35 % der gesamten Laufflächendicke beträgt.

3. Kautschukzusammensetzung für den Basislaufflächenteil der Ansprüche 1 oder 2, dadurch gekennzeichnet, daß der Dien-Kautschuk verschieden von dem sternförmigen, lösungspolymerisierten Kautschuk ein Butadien-Kautschuk ist.

4. Kautschukzusammensetzung nach Anspruch 3, dadurch gekennzeichnet, daß der sternförmige, lösungspolymerisierte Butadien-Kautschuk in seiner Molekulargewichtsverteilungskurve zwei Spitzen aufweist.

## Revendications

1. Pneumatique comprenant une bande de roulement possédant une structure à deux couches comportant une partie de chappe et une partie de base, dans lequel la composition de caoutchouc de la partie de bande de roulement de base est caractérisée par le mélange, pour 100 parties en poids d'un ingrédient de caoutchouc, de 30 à 55 parties en poids de noir de carbone ayant un indice d'adsorption d'iode compris entre 40 et 100 g/kg, l'ingrédient de caoutchouc comprenant :
(A) 20 à 55 % en poids d'un caoutchouc de butadiène polymérisé en solution à configuration en étoile ayant un taux de couplage au tétrachlorure d'étain qui n'est pas inférieur à 25 % et une distribution de masse moléculaire (masse moléculaire moyenne en poids/masse moléculaire en nombre) comprise entre 1,2 et 3, et
(B) 45 à 80 % en poids d'un caoutchouc naturel ou d'un caoutchouc naturel contenant un caoutchouc de diène autre qu'un caoutchouc polymérisé en solution à configuration en étoile en quantité qui ne dépasse 50 % en poids, la valeur tgδ du caoutchouc de la partie de bande de roulement de base étant inférieure à la valeur tgδ du caoutchouc de la partie de bande de roulement de base.

2. Pneumatique selon la revendication 1, caractérisé en ce que l'épaisseur de la partie de base est comprise entre 10 et 35 % de l'épaisseur totale de la bande de roulement.

3. Composition de caoutchouc destinée à la partie de bande de roulement de base selon les revendications 1 ou 2, caractérisée en ce que le caoutchouc de diène autre que le caoutchouc polymérisé en solution à configuration en étoile est un caoutchouc de butadiène.

4. Composition de caoutchouc selon la revendication 3,, caractérisée en ce que le caoutchouc de butadiène polymérisé en solution à configuration en étoile a deux pics dans sa courbe de distribution de masse moléculaire.
